# EUROPEAN PATENT APPLICATION

(11) **EP 4 797 865 A1**
(43) Date of publication of application: **26.08.2026**
(21) Application number: 25160011.0
(22) Date of filing: 25.02.2025
(51) Int. Cl.: H04W 84/18, H04W 8/00, H04W 88/04

(54) **COMMUNICATION BETWEEN ALARM DEVICES WITH RF FUNCTIONALITY**

(71) Applicant: E.I. Technology Unlimited Company, Shannon, Co. Clare (IE)
(72) Inventor: O'SHEA, Daniel, Shannon (IE); RICHARDSON, David, Shannon (IE)
(74) Representative: Weldon O'Brien Ltd.

(57) **Abstract**

An alarm device (50) has a sensor (52), a digital data processor (54), a wireless RF communication interface (57, 58), and a user interface (53, 54). It communicates in a protocol by wirelessly transmitting messages with other devices within RF range, and which devices are also arranged to communicate according to the protocol. It stores a distribution list of all house coded devices in a network in a sequential order, and processes received acknowledge messages from other devices if they are received in pre-determined time slots determined by said sequential order. The processor includes in an acknowledge message a neighbour list of identifiers of direct communication neighbours, and the processor is configured to maintain a distribution list of identifiers of acknowledging devices included in received neighbour lists, and to determine if a repeat message is required if a neighbour list includes a device identifier not in the current distribution list.

## Description

### Introduction

The present invention relates to RF enabled alarm devices, such as fire or smoke alarm devices. More particularly, the invention relates to RF communication between devices of a network.

Our prior patent number EP2581891 describes a system in which each alarm device is adapted to, in a learning mode, automatically register in a monitoring cluster. The cluster is typically a subset of the full system, for example units on the same building floor in adjoining rooms/hallways.

The present invention is directed towards achieving enhanced communication between devices in a network.

### Summary of the Invention

We describe a device comprising a digital data processor, a memory, a wireless RF communication interface, and a user interface, each processor being adapted to communicate in a protocol by wirelessly transmitting messages with other devices within RF range and which devices are also arranged to communicate according to the protocol, wherein:
the processor is configured to store a distribution list of all house coded devices in a network in a sequential order, and to
process received acknowledge messages from other devices if they are received in pre-determined time slots determined by said sequential order.

In some preferred examples, the processor is configured to include in an acknowledge message a neighbour list of identifiers of direct communication neighbours, and the processor is configured to maintain a distribution list of identifiers of acknowledging devices included in received neighbour lists, and to determine if a repeat message is required if a neighbour list includes a device identifier not in the current distribution list.

In some preferred examples, the processor is configured to transmit a payload with an instruction to a device in the distribution list and which is in direct communication with a device which is not in the distribution list, said instruction being to act as a source device for a repeat message.

In some preferred examples, the processor is configured to maintain an influence list of devices to identify an overlap in neighbours to act as source devices, and to include in the instruction repeat message time slots to avoid clashing.

In some preferred examples, the processor is configured to use bitfield device identifiers, and said identifiers are read from the acknowledge messages.

In some preferred examples, the processor is configured to act as a current source device or master device by utilising the received acknowledge messages to calculate routing for further repeats.

In some preferred examples, the processor is configured to dynamically set a receive window for acknowledge messages according to the number of devices in the network.

In some preferred examples, to begin inter-device communication the processor is configured to transmit a wake message with a decrementing counter setting a time for transmission of a payload message, and to receive an acknowledge message from each addressed receiving device after transmission of the payload message, and to recognize each receiving device according to a time slot following the payload message, aid timeslot being based on each receiving device's position according to said sequential order.

We also describe a system comprising a plurality of devices of any example described herein.

In some preferred examples, the devices include alarm devices each alarm device comprising a condition sensor and the processor is configured to process signals from said sensor to determine if an alarm event occurs.

In some preferred examples, the devices also include at least one edge device which is not configured for condition sensing.

### Detailed Description of the Invention

The invention will be more clearly understood from the following description of some embodiments thereof, given by way of example only with reference to the accompanying drawings in which:
Fig. 1 is a set of examples of timeslot-based acknowledge message sequencing,
Fig. 2 is a diagram of a simple mesh network,
Fig. 3 is a diagram illustrating a two-repeat scenario,
Fig. 4 is a diagram showing a simple network; and
Fig. 5 is a diagrammatic representation of the hardware architecture of a single device.

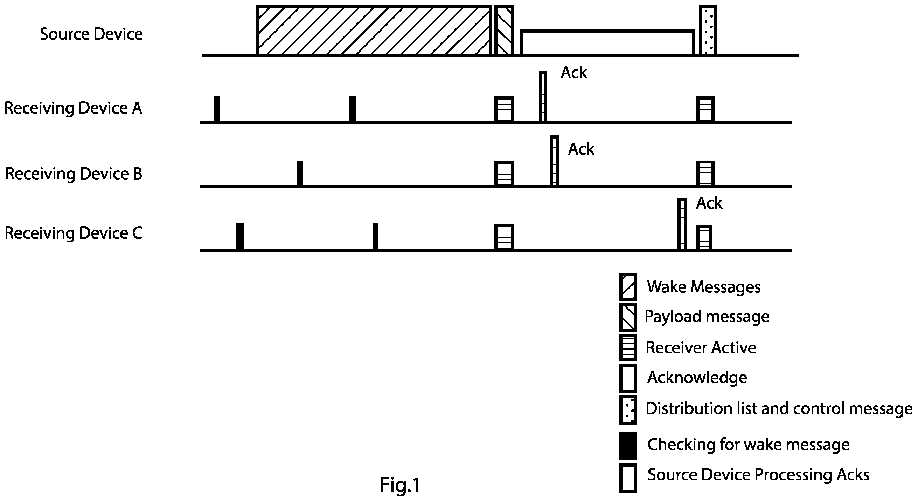

The invention provides a network of alarm devices (or "units", these words being used interchangeably) in a local area network (within RF range), each comprising a processor with and a memory, a wireless communication interface, a condition sensor, and a user interface. The processor is configured to communicate with other devices within RF range by wirelessly transmitting messages. The communication methods are set out below with reference to Figs. 1 to 4. There is very effective communication based on each processor knowing its device position in a sequential order in the network.

At least one of the units stores a house code table which has been generated during house coding, and this has a sequential order based on a unique code for each device, in this example the serial number.

Each receiving unit transmits an acknowledgement message according to its time slot as determined by the sequential order. Each device in the network holds a unique position in a table of networked serial numbers based on a specific sorting. A house code process ensures that all devices within the network have the same house code table and therefore the rank of a device's serial number within the table is unique. The devices also sort their house code table during the house coding process which enables them to determine the relevant position of any serial number within the network.

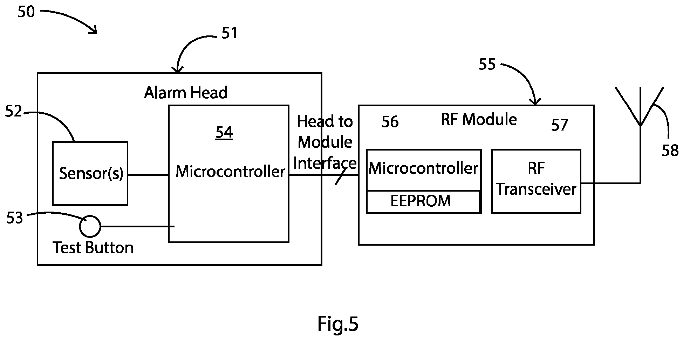

As shown in Fig. 5 each unit is indicated by the numeral 50 and in this example has an alarm head 51 with smoke and heat sensors 52 and a test button linked with a microcontroller 54. The test head 51 is linked with an RF module 55 having a microcontroller 56 linked with an RF transceiver 57, in turn linked with an antenna 58. At this hardware level the alarm device is of known construction. In other examples the devices are not alarm devices and do not include condition sensors. However, the invention applies particularly well to alarm devices for fire or gas (such as CO), including smoke and heat alarm devices. A system of the invention can have a combination of such devices.

Fig. 1 shows a mesh transmission by a Source Device followed by acknowledgement messages from three receiving devices A, B, and C. As illustrated, the Source Device issues an elongated wake message, and each of the three receiving devices recognises this by waking for a short duration which overlaps with the Source Device's wake message. The receiving devices wake periodically to check for wake messages; and when one is received the device will determine if the message is intended for it and if so, will sleep until the payload is due and then receive it. This is accomplished by the inclusion of a decrementing counter within the wake-messages which times down to the transmission of the payload. Fig. 1 illustrates that each receiving device is "Receiver Active" at the same time as the Source Device transmits its payload message.

Each of the three receiving devices will then send an acknowledge message A, B, C respectively within a timeslot based on its position within the house code table. The lowest ranked device, A, will transmit first, as shown in Fig. 1.

The acknowledge message contains some data which is used by the Source Device in determining the best onwards repeater(s) for the message. The data contained within the acknowledge is:
- A bitfield known as the neighbour list containing the direct neighbours of the device which is acknowledging (position is based on the ranks within the network table, the house code table).
- Serial number of the acknowledging device.

Potential for some additional information to also be contained in certain acknowledge messages:
- Fault status - device status good/fault present.

The additional data could be used within a system test to confirm that all devices are operating free of faults.

The Source Device processes all incoming acknowledge messages to determine if all devices in the network have received the message and, if not, to determine the best devices to repeat the message in order to expand the distribution of the message.

The Source Device achieves this by filling a bitfield with the serial number of each acknowledging device. This bitfield is known as the distribution list. The direct neighbour list of each acknowledging unit is then compared with the distribution list which has been completed after the timeslot for all acknowledging units has expired.

If a direct neighbour list contains a serial number which is not present on the distribution list, this device identifier is populated into a current expansion list, and it will be instructed to repeat the message.

The Source Device will process the neighbour lists of each acknowledging device in order of its position in the house code table.

As devices are instructed to repeat the message, the distribution list is updated by the Source Device prior to processing the next neighbour list. This ensures that the number of repeats in the system is kept to a minimum.

The protocol reduces the number of re-transmissions/repeats while ensuring full message delivery within the network.

### Dynamic acknowledge timeslot

As the total number of units within the system is known based on the house code table, the acknowledge timeslot can be dynamically adjusted so that the receive length of the Source Device is minimised to only be as long as required for the number of devices in the system. This can further improve efficiency in response time of the system and overall power consumption.

Two main options exist for the repeat control, a basic version and one that allows delayed repeating.

### Protocol, Additional Details

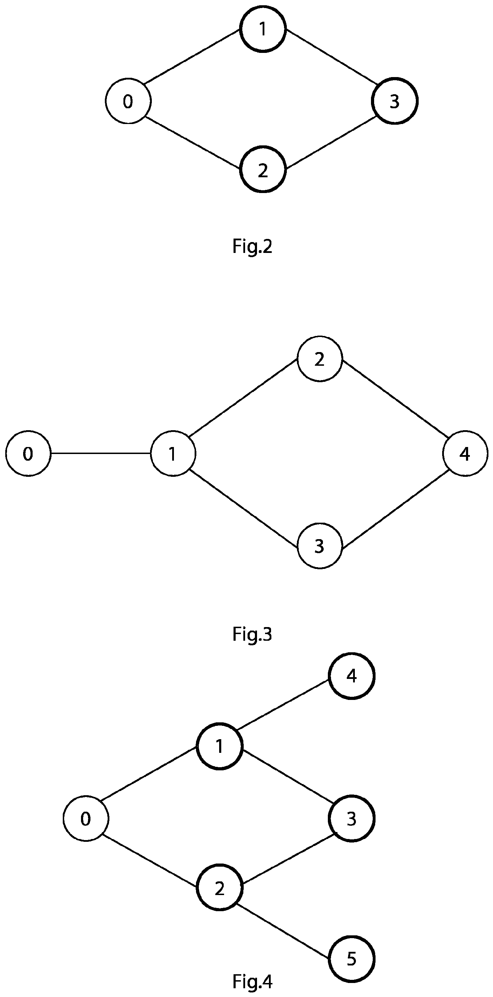

Fig. 2 shows a simple mesh network with four devices. Device 0 is the source of the initial message (and so is the "Source Device") and both Device 1 and Device 2 will acknowledge this message. Device 0 will determine that only Device 1 needs to retransmit the message in order to expand the distribution of the message as both Devices 1 and 2 have a direct connection with the final device, Device 3, within the system. In this case there is no issue with the simple control message as only one device needs to transmit the message.

### Processing the acknowledge messages

The acknowledge messages are processed to determine the message repeating route. The communication scheme does not intend to determine the optimum message route and instead aims to provide a balance between complexity and efficiency.

As acknowledge messages are received, the Source Device stores the incoming neighbour information within an array as shown below. Each element contains a bitfield which is index linked based on the rank of the serial number within the network. The bitfield is large enough to store the entire network.

### Definitions

### List Bitfield

Each bit represents the device at this bit position within the sequential order of the network. Example:
Sequential order of network, Device 3, Device 2, Device 1, Device 0
Bitfield: 0b1111 whereby the leftmost bit represents device 3 and the rightmost bit represents device 0

### Neighbour List

Bitfield which indicates which devices are in direct communication with the source device. E.g. 0b0011. This device is in direct communication with device 1 and device 0.

### Distribution List

Bitfield which indicates which devices have received the message including the source device.

### Expansion List

Bitfield which indicates which devices will receive the message should the acknowledging device repeat the message.

### Influence List

Bitfield which indicates which devices will receive the message in a particular timeslot.

### Control and Distribution Message

Message that includes the distribution list (List of units that have received the original message) and may also contain an instruction to repeat the message and which timeslot this repeat should occur in.

Fig. 3 shows a simple network with five nodes, to demonstrate the neighbour list and how message routing is performed. Table 1 below shows a simplified neighbour list for this network, which only shows the lower five bits of the bitfield.

**Table 1**

| **Device** | **Neighbour List** |
|---|---|
| 0 | 0b00010 |
| 1 | 0b01101 |
| 2 | 0b10010 |
| 3 | 0b10010 |
| 4 | 0b01100 |

As an example, consider the routing of an alarm message which is generated by Device 0. Only one device will acknowledge the message, which is Device 1 (due to its proximity). The neighbour list returned within the acknowledge message is only 0b01101. Independent of the number of devices which acknowledge the message, the Source Device will check its full neighbour list in order from 0 - (number of devices in network - 1). During this check of neighbour lists, the Source Device is trying to determine an expansion list: a list is of the new devices that will be reached if the message is repeated, and it depends on the neighbour lists. During the check, if a device contributes to the expansion list, it will be instructed to repeat the message. In other words, if device X sends back an acknowledge message identifying a direct neighbour which is not in the current distribution list, device X will be instructed to repeat the message by acting as a source device in order to reach the device in the expansion list.

In the example only Device 1 acknowledges, and its neighbour list was 0b01101. The distribution list would be 0b00011at this time as only devices 0 and 1 have effectively received the message. Device 0 is the originator (Source Device) and therefore its bit in the distribution list is set. The expansion list for the time the acknowledge message from Device 1 is processed will be 0b01100 as devices 2 and 3 would be reached if Device 1 repeats the message, therefore, Device 1 will be instructed to repeat.

As no other devices could hear the message, the rest of the scan will yield no further expansion, resulting in only Device 1 repeating the message. Device 1 now effectively becomes the Source Device of the repeat message, and the process will begin again. Three devices will now acknowledge the message from Device 1, these are devices 0, 2 and 3. Each of these will include its neighbour list and these lists will be processed in ascending order.

When Device 0 is processed, no expansion will occur and therefore it will be instructed not to repeat the message. Device 2 will yield an expansion list of 0b10000 and will be instructed to repeat the message. Device 3 will also be processed, and no expansion is provided as Device 4 is included based on 2 repeating. Therefore, Device 3 will be instructed to not repeat the message. In this network it would not matter if Device 2 or 3 repeated the message. The instruction for Device 2 to repeat is based only on the order the neighbour list is processed. This simplifies the process at the expense of efficiency, in this case no loss of efficiency occurred but, in some cases, additional repeating will occur.

To complete this example, the repeating process ends when Device 2 repeats the message. Devices 1, 3 and 4 will acknowledge the message, and after processing there will be no further repeats as there is no expansion possible.

A secondary process is also occurring during the scanning of the neighbour list, which has an impact when multiple devices will be set as a repeater. The process checks for overlap between repeaters, as this overlap could result in those devices not receiving the repeat message from either repeater is they transmit at the same time. Therefore, an influence list is maintained and used to check for this overlap.

The influence list is the list of all nodes that are reached by devices that are set as repeaters. If a device expands the network reach, its neighbour list will be checked against the influence list to determine if it should repeat in a different timeslot. If moving to a different timeslot, the influence list can be set back to that device's neighbour list, as there is no longer a potential overlap with the other timeslots.

### Delayed Repeating Protocol

It is more complex when multiple devices must repeat the message, as described with reference to the network of Fig. 4. In this case both Devices 1 and 2 need to repeat in order for all devices (devices 3, 4 and 5) in the network to receive the message. As both Devices 1 and 2 have a common neighbour, Device 3, there is the potential for message clashing. Device 1 will repeat the message first and as it is not in direct contact with Device 2, it will transmit shortly afterwards. The time delay will be significantly shorter than the length of a message exchange and therefore Device 3 will not receive the message from Device 2 and it could potentially lead to a missed payload message from Device 1 due to both Device 1 and Device 2 transmitting together at the time of the payload transmission. Device 3 if it successfully receives the payload from Device 1, will also transmit its ack at the wrong time with respect to its timeslot for Device 2. Therefore, to avoid this situation it is required by the protocol that the repeat on Device 2 occurs one message slot after that of Device 1. This is achieved by increasing the data available with the payload message to include the instruction to not repeat, repeat in Slot 1, repeat in Slot 2 etc.

### Transitory Master / Multi Master

Initially the source device is the master within the protocol, it will send its message and based on the acknowledges received, it decides which neighbouring devices will repeat the message. Once a device is selected as a repeater this device will become a master within the network until it passes control to the next repeater, or the transmission ceases.

As multiple units may have to repeat a message to further units, it is possible that the originating source device sets multiple units to act as sources. In this multi source system, each source is acting independently with no influence from other source devices. An example of this may occur is shown in Fig, 3, with the originating unit 0, requesting both unit 1 and 2 to repeat the same time, thus both of these units acting as sources within the system simultaneously. The current source device may be referred to as a master device.

Components of embodiments can be employed in other embodiments in a manner as would be understood by a person of ordinary skill in the art. The invention is not limited to the embodiments described but may be varied in construction and detail.

## Claims

1. A device (50) comprising a digital data processor (54), a memory, a wireless RF communication interface (57, 58), and a user interface (53, 54), each processor being adapted to communicate in a protocol by wirelessly transmitting messages with other devices within RF range and which devices are also arranged to communicate according to the protocol, wherein:
the processor is configured to store a distribution list of all house coded devices in a network in a sequential order, and to
process received acknowledge messages from other devices if they are received in pre-determined time slots determined by said sequential order.

2. A device as claimed in claim 1, wherein the processor is configured to include in an acknowledge message a neighbour list of identifiers of direct communication neighbours, and the processor is configured to maintain a distribution list of identifiers of acknowledging devices included in received neighbour lists, and to determine if a repeat message is required if a neighbour list includes a device identifier not in the current distribution list.

3. A device as claimed in claim 2, wherein the processor is configured to transmit a payload with an instruction to a device in the distribution list and which is in direct communication with a device which is not in the distribution list, said instruction being to act as a source device for a repeat message.

4. A device as claimed in claim 3, wherein the processor is configured to maintain an influence list of devices to identify an overlap in neighbours to act as source devices, and to include in the instruction repeat message time slots to avoid clashing.

5. A device as claimed in any of claims 2 to 4, wherein the processor is configured to use bitfield device identifiers, and said identifiers are read from the acknowledge messages.

6. A device as claimed in any preceding claim, wherein the processor is configured to act as a current source device or master device by utilising the received acknowledge messages to calculate routing for further repeats.

7. A device as claimed in any preceding claim, wherein the processor is configured to dynamically set a receive window for acknowledge messages according to the number of devices in the network.

8. A device as claimed in any preceding claim, wherein to begin inter-device communication the processor is configured to transmit a wake message with a decrementing counter setting a time for transmission of a payload message, and to receive an acknowledge message from each addressed receiving device after transmission of the payload message, and to recognize each receiving device according to a time slot following the payload message, aid timeslot being based on each receiving device's position according to said sequential order.

9. A system comprising a plurality of devices of any preceding claim.

10. A system as claimed in claim 9, wherein the devices include alarm devices each alarm device comprising a condition sensor (52) and the processor is configured to process signals from said sensor to determine if an alarm event occurs.

11. A system as claimed in claim 10, wherein the devices also include at least one edge device which is not configured for condition sensing.
